# FASCICULE DE BREVET EUROPEEN

(11) **EP 2 178 724 B1**
(45) Date de publication et mention de la délivrance du brevet: **18.12.2013**
(21) Numéro de dépôt: 08786787.5
(22) Date de dépôt: 01.08.2008
(51) Int. Cl.: B60R 25/00, G08G 1/005, G08G 1/123

(54) **PROCÉDÉ DE LOCALISATION D'UN VÉHICULE**
VERFAHREN ZUM SUCHEN EINES FAHRZEUGS
METHOD FOR LOCATING A VEHICLE

(30) Priorité: 09.08.2007 FR 0705791
(43) Date de publication de la demande: 28.04.2010
(73) Titulaire: Valeo Sécurité Habitacle, 94046 Créteil Cedex (FR)
(72) Inventeur: STAFFOLANI, Julien, F-94042 Creteil (FR)
(74) Mandataire: Jacquot, Ludovic R. G.
(86) Numéro de dépôt international: PCT/EP2008/060170
(87) Numéro de publication internationale: WO 2009/019228

(56) Documents cités:
- EP-A- 1 065 641
- EP-A- 1 219 512

## Description

### Domaine de l'invention

La présente invention concerne un procédé de localisation d'un véhicule automobile, et un dispositif de localisation permettant de mettre en oeuvre ledit procédé.

Elle trouve une application particulière dans le domaine des véhicules automobiles.

### Etat de la technique

Dans le cas d'une application véhicule automobile, selon un état de la technique connu, voir par exemple EP 1219512 lorsque un utilisateur d'un véhicule ne sait pas où son véhicule est garé, il peut utiliser un objet d'identification pour localiser son véhicule et ainsi le retrouver. Un problème de cet état de la technique connu est qu'il permet effectivement de retrouver le véhicule égaré, mais ne peut empêcher son vol en cas de vol de l'objet d'identification, le voleur utilisant alors la fonction localisation.

### Objet de l'invention

La présente invention a pour but notamment de résoudre le problème évoqué ci-dessus.

Selon un premier objet de l'invention, ce but est atteint par un procédé de localisation d'un véhicule automobile, caractérisé en ce qu'il comporte les étapes de :
- Saisir un code de localisation ;
- Vérifier le code de localisation ; et
- Localiser le véhicule automobile, la localisation étant lancée par un objet d'identification, l'objet d'identification permettant un accès au véhicule et son démarrage ;
- Si le code de localisation est invalide, un délai d'inhibition est lancé pendant lequel la localisation est inhibée. Cela permet de protéger la fonction localisation sans la bloquer en cas de simple mauvaise manipulation.

Comme on va le voir en détail par la suite, un tel procédé présente l'avantage d'empêcher une personne autre qu'un utilisateur d'un véhicule automobile de localiser le véhicule après un vol de l'objet d'identification permettant l'accès au véhicule et son démarrage et ainsi de le voler, et ce grâce au code de localisation prévu qui n'est connu que de l'utilisateur et permet d'accéder à cette fonction localisation.

Selon des modes de réalisation non limitatifs, le procédé présente en outre les caractéristiques suivantes.
- La localisation du véhicule automobile s'effectue lorsque ce dernier est à l'arrêt. Cela permet à un utilisateur du véhicule de retrouver l'endroit où il est garé.
- La saisie du code de localisation est autorisée un nombre fixé de fois. Cela permet à l'utilisateur de réessayer la saisie de son code de localisation s'il s'est trompé par inadvertance. Cela évite également à un fraudeur d'avoir un nombre illimité d'essais.
- L'accès et le démarrage au véhicule sont inhibés en même temps que la localisation. Cela permet de retarder le vol et de permettre à l'utilisateur de réagir s'il a été averti par un signal d'alerte.
- La localisation du véhicule se fait par une lecture de données de localisation du véhicule automobile dans l'objet d'identification. Il suffit de lire en mémoire cette localisation pour retrouver par la suite le véhicule au lieu de faire un calcul de localisation en temps réel. C'est donc un moyen simple à mettre en oeuvre. Enfin, cela permet d'être sûr d'avoir les données de localisation du véhicule accessibles lors de l'utilisation du véhicule. L'utilisateur a en effet toujours son objet d'identification avec lui lorsqu'il utilise son véhicule, l'objet d'identification permettant l'accès au véhicule et son démarrage.
- La localisation du véhicule se fait par une communication à distance avec le véhicule dans le cas où il n'existe pas de données de localisation dans l'objet d'identification. Cela permet de connaître la position du véhicule même si un enregistrement des données de localisation a échoué.

Selon un deuxième objet de l'invention, elle concerne un dispositif de localisation d'un véhicule automobile, caractérisé en ce qu'il comporte une unité de contrôle adaptée pour :
- Saisir un code de localisation ;
- Vérifier le code de localisation ; et
- Localiser le véhicule automobile, la localisation étant lancée par un objet d'identification, l'objet d'identification permettant un accès au véhicule et son démarrage;
- Lancer un délai d'inhibition pendant lequel la localisation est inhibée si le code de localisation est invalide.

Selon un troisième objet de l'invention, elle concerne un objet d'identification pour véhicule automobile, caractérisé en ce qu'il comporte un dispositif de localisation selon la caractéristique précédente.

Selon un quatrième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

### Brève description des figures

D'autres caractéristiques et avantages de la présente invention seront mieux compris à l'aide de la description et des dessins non limitatifs parmi lesquels :
- la Fig. 1 représente un diagramme d'un premier mode de réalisation non limitatif d'un procédé de localisation ;
- la Fig. 2 représente un diagramme d'un deuxième mode de réalisation non limitatif du procédé de localisation, selon l'invention ;
- la Fig. 3 représente un diagramme d'un troisième mode de réalisation non limitatif du procédé de localisation selon l'invention ;
- la Fig. 4 est un schéma d'un premier mode de réalisation non limitatif d'un dispositif de localisation permettant la mise en oeuvre du procédé de la Fig. 1 ;
- la Fig. 5 est un schéma d'un deuxième mode de réalisation non limitatif d'un dispositif de localisation permettant la mise en oeuvre du procédé de la Fig. 1 ;
- la Fig. 6 est un schéma d'un troisième mode de réalisation non limitatif d'un dispositif de localisation permettant la mise en oeuvre du procédé de la Fig. 1 ;
- la Fig. 7 est un schéma d'un quatrième mode de réalisation non limitatif d'un dispositif de localisation permettant la mise en oeuvre du procédé de la Fig. 1 ; et
- la Fig. 8 montre le dispositif de localisation de la Fig. 4 qui coopère avec un deuxième appareil mobile.

### Description détaillée de modes de réalisation non limitatifs de l'invention

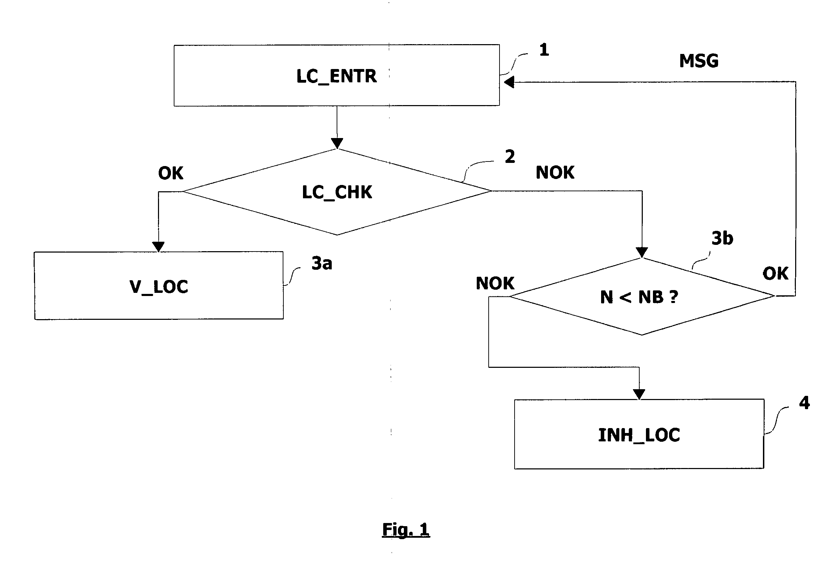

Un procédé de localisation d'un véhicule automobile est décrit dans un mode de réalisation non limitatif à la Fig. 1.
Il comporte notamment les étapes suivantes :
- Saisir (LC_ENTR) d'un code de localisation LC ;
- Vérifier le code de localisation LC (LC_CHK) ; et
- Localiser le véhicule automobile V (V_LOC), la localisation étant lancée par un objet d'identification ID, l'objet d'identification ID permettant un accès au véhicule V et son démarrage.

L'objet d'identification Id peut être dans un exemple non limitatif porté par un utilisateur du véhicule V, et est par exemple un badge, une clef, un porte clef appelé en anglais «keyfob» etc. Il permet d'accéder au véhicule V et de le démarrer. Les méthodes d'accès au véhicule et de démarrage sont bien connus de l'homme du métier et ne sont donc pas décrites ici.

Les étapes sont décrites en détail ci-après.

**Dans une première étape 1),** on saisit un code de localisation LC.

Ce code de localisation LC permet ainsi d'accéder à la fonction localisation du véhicule. Il est personnel à un utilisateur du véhicule automobile V. Il permet ainsi d'empêcher le vol du véhicule par un fraudeur suite par exemple au vol de l'objet d'identification ID lui-même.
Dans des modes de réalisation non limitatifs, ce code de localisation peut être composé de :
- chiffres, caractères, pictogrammes, ou
- données biométriques utilisant :
- une empreinte digitale,
- une empreinte vocale,
- un iris,
- le visage etc.
Bien entendu, d'autres types de code de localisation LC peuvent être envisagés.

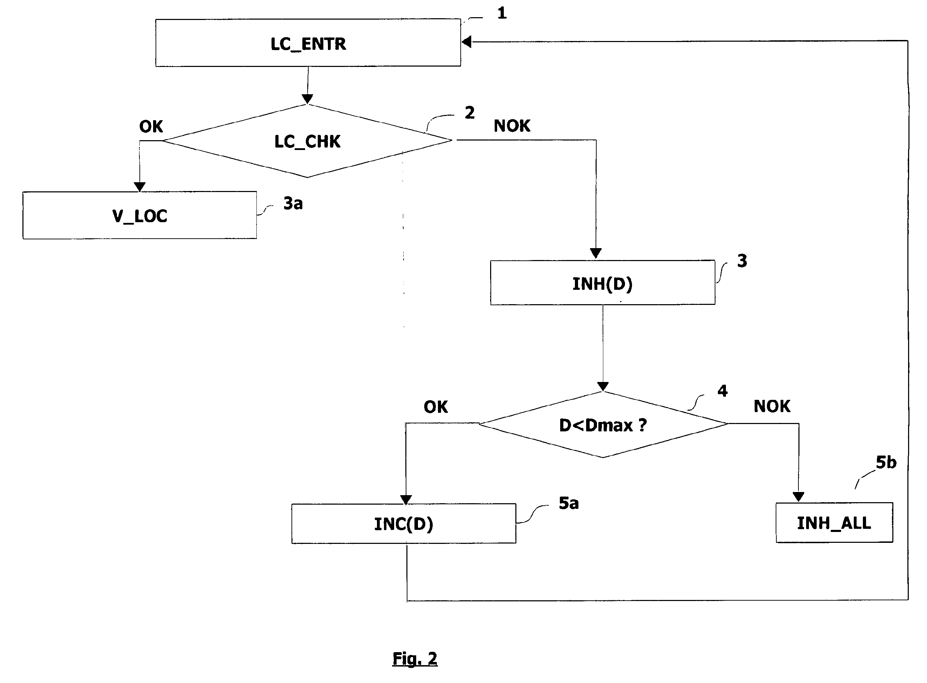

La saisie du code de localisation LC se fait au moyen de l'objet d'identification ID, ce dernier comportant une interface homme-machine IHM illustrée à la Fig. 2 comprenant des boutons de navigation BN (ces boutons permettant par exemple de faire défiler des menus et pouvant également être utilisés pour saisir un code de localisation) et :
- un lecteur biométrique BR (si des données biométriques sont utilisées), ou
- un microphone MIC (si des données vocales sont utilisées), ou
- une optique photo OP (si des données photo sont utilisées).
Ainsi, l'utilisateur n'a besoin que d'un seul appareil, ici l'objet d'identification ID pour effectuer la localisation de son véhicule V et l'accès à son véhicule V et le démarrage.

### Dans une deuxième étape 2), on vérifie le code de localisation LC.

Dans un exemple non limitatif, la vérification s'effectue au moyen d'un comparateur (non représenté) permettant de comparer le code de localisation LC (que ce soit des chiffres/caractères/pictogrammes ou des données biométriques) avec un code de référence LC_REF. Le code de référence LC_REF peut être inscrit en mémoire MEM1 de l'objet d'identification ID.

**Dans une troisième étape 3a)**, si la vérification du code de localisation LC est positive (le code de localisation LC est valide), la localisation du véhicule automobile V étant lancée à partir de l'objet d'identification ID.
Ainsi, à chaque fois que la fonction localisation est utilisée dans l'objet d'identification ID, un code de localisation LC est demandé au préalable, et après une vérification positive, la fonction localisation V_LOC est accessible par l'utilisateur du véhicule V.

Dans un mode de réalisation non limitatif, la localisation du véhicule automobile s'effectue lorsque ce dernier est à l'arrêt (quand l'utilisateur a quitté son véhicule). Cela permet à l'utilisateur du véhicule de lui rappeler où son véhicule est garé (où se trouve sa place de parking par exemple), par exemple dans le cas où il ne s'en souvient plus ou dans le cas où une personne à qui il aurait prêté son véhicule l'aurait utilisé en dernier.

Différents mode de localisation du véhicule V au moyen d'un objet d'identification ID peuvent être effectués et sont résumés dans le tableau suivant et expliqués à la suite.
Pour illustrer ces modes, on prend un exemple de système de localisation tel qu'un GPS lorsque le véhicule V et/ou l'objet d'identification ID en comporte un.

| ***Localisation*** | ***Objet ID*** | ***Véhicule V*** |
|---|---|---|
| 1) Statique/Statique | Ne comporte pas de GPS | Lecture en mémoire de la localisation |
| 2) Statique/Dynamique | Ne comporte pas de GPS | Comporte un GPS : |
| | | Localisation à distance |
| 3) Dynamique/Statique | Comporte un GPS | Ne comporte pas un GPS : |
| | | Lecture en mémoire de la localisation |
| 4) Dynamique/Dynamique | Comporte un GPS | Comporte un GPS : |
| | | Localisation à distance |

Ainsi, lors d'une localisation statique/statique, la localisation du véhicule V se fait par une lecture de données de localisation DAT_LOC du véhicule (donnant la position du véhicule V) en mémoire MEM1 dans l'objet d'identification ID.
On notera que cette position a été entrée :
- soit manuellement par l'utilisateur lorsqu'il a quitté son véhicule V. les données DAT_LOC concernant la position du véhicule V peuvent par exemple être un nom de rue, numéro de parking etc. avec du texte ou des informations vocales ou une photo etc. Le véhicule V ne comporte pas dans ce cas de système GPS ; et
- soit automatiquement par un envoi des données de localisation DAT_LOC par le véhicule V à l'objet d'identification ID, via une communication radiofréquence RF, au moment où l'utilisateur a quitté le véhicule V. Le véhicule comporte à ce moment un système GPS (pouvant être associé à un système de navigation NAV) et une antenne RF et l'objet d'identification ID se trouve à portée directe de l'antenne RF. Par communication radiofréquence RF, on entend ici une communication qui s'effectue aux alentours des MHz, par exemple 433MHz pour
une portée par exemple entre 30 et 100 mètres.
Ce mode est simple à mettre en oeuvre et prend très peu de temps.

Lors d'une localisation statique/dynamique, la localisation du véhicule V se fait par le système de localisation GPS du véhicule V. A ce moment une communication à distance s'effectue entre le véhicule V et l'objet d'identification ID. Par communication à distance, on entend ici une communication qui s'effectue aux alentours des GHz, par exemple du type GSM.

On notera que pour ce premier et second modes de réalisation, les données de localisation du véhicule DAT_LOC obtenues peuvent être affichées sur un écran SCR de l'objet d'identification ID.

Lors d'une localisation dynamique/statique, la locatisation du véhicule V se fait par une comparaison entre :
- la position du véhicule V qui est lue dans une mémoire MEM1 de l'objet d'identification ID, cette position ayant été entrée automatiquement par le système GPS de l'objet d'identification ID lorsque l'utilisateur a quitté le véhicule. En effet, lorsque l'utilisateur quitte son véhicule V, les coordonnées GPS de l'objet ID sont les mêmes que celles du véhicule V, l'objet ID étant à proximité immédiate du véhicule V ;
- et la position actuelle de l'objet d'identification ID donnée par son système GPS, cette position étant actualisée en temps réel lorsque l'utilisateur se déplace avec son objet d'identification ID. Cela permet de connaître l'emplacement du véhicule par rapport à l'endroit exact où se trouve l'utilisateur du véhicule. On peut ainsi guider facilement l'utilisateur depuis sa position actuelle jusqu'à son véhicule V. La localisation de la position de l'objet d'identification ID et donc de l'utilisateur est donc mise à jour au fur et à mesure que l'utilisateur se déplace. On guide donc l'utilisateur vers l'emplacement de son véhicule V.

On notera que lorsque l'utilisateur a quitté son véhicule et en cas de non fonctionnement du GPS pour cause de signal GPS absent (le véhicule étant dans un parking souterrain par exemple), l'objet d'identification ID aura invité l'utilisateur à enregistrer manuellement la localisation du véhicule V (par exemple par un envoi d'un signal sonore et d'un message à l'écran). Dans ce cas, la position du véhicule aura été entrée manuellement. Dans ce cas, si la position manuelle est une adresse, une comparaison est possible avec la position actuelle de l'objet d'identification ID. Sinon (par exemple dans le cas d'une position vocale), une comparaison n'est pas possible et donc on revient dans le premier mode de localisation statique/statique.

Lors d'une localisation dynamique/dynamique, la localisation du véhicule V se fait par une comparaison entre :
- la position du véhicule donnée par son système de localisation GPS ; et
- la position actuelle de l'objet d'identification ID donnée par son système GPS, cette position étant actualisée en temps réel lorsque l'utilisateur se déplace avec son objet d'identification ID. Cela permet de connaître exactement l'emplacement du véhicule par rapport à l'endroit exact où se trouve l'utilisateur du véhicule. On peut ainsi guider facilement l'utilisateur depuis sa position actuelle jusqu'à son véhicule V. La localisation de la position de l'objet d'identification ID et donc de l'utilisateur est donc mise à jour au fur et à mesure que l'utilisateur se déplace. On guide donc l'utilisateur vers l'emplacement de son véhicule V.

A ce moment une communication à distance (comme décrite précédemment) s'effectue entre le véhicule V et l'objet d'identification ID.

On notera que pour ce troisième et quatrième modes de réalisation, le résultat de la comparaison entre positions du véhicule V et de l'objet d'identification ID est une information de guidage qui peut être affichée sur un écran SCR de l'objet d'identification ID.

On notera que l'intérêt d'avoir une localisation dynamique du véhicule V (second et quatrième modes de localisation vus ci-dessus), est de pouvoir le localiser même si aucune donnée de localisation DAT_LOC n'a été enregistrée en mémoire (manuellement ou automatiquement) lorsque l'utilisateur a quitté son véhicule V.
Ainsi, dans une variante de réalisation du deuxième mode (statique/dynamique) et du quatrième mode (dynamique/dynamique), on peut prévoir de n'utiliser ces modes (localisation du véhicule par une communication à distance avec le véhicule) que dans le cas où il n'existe pas de données de localisation DAT_LOC dans l'objet d'identification ID. Cela veut dire que l'on teste d'abord s'il existe des données de localisation DAT_LOC en mémoire dans l'objet d'identification ID. De plus, cela permet d'économiser la batterie de l'objet d'identification ID, toute communication à distance étant consommatrice d'énergie.

Par ailleurs, on notera que dans un mode de réalisation non limitatif, le système de localisation (de l'objet ID et du véhicule V) est associé avec un système de navigation NAV. Cela permet de transcrire les coordonnées GPS en une information telle qu'une adresse qui est plus compréhensible pour l'utilisateur.

**Par contre, dans une troisième étape 3b),** si la vérification du code de localisation LC est négative (le code de localisation LC est invalide), on exécute l'étape suivante.

Dans un premier mode de réalisation illustré à la Fig. 1, on regarde si le nombre de saisies N est inférieur à un nombre de saisies autorisées fixé NB.
Dans un premier cas, si le code de localisation LC est invalide et si le nombre de saisies N est inférieur à un nombre fixe de saisies autorisées NB, par exemple trois, on autorise une autre saisie. Cela permet à l'utilisateur de pouvoir ressaisir son code de localisation lorsqu'il s'est trompé par inadvertance.
Ainsi, en deçà du nombre fixé NB de saisies autorisées, on considère que c'est l'utilisateur du véhicule qui détient l'objet d'identification ID. Dans ce premier cas, on peut prévoir qu'un message MSG est affiché sur l'écran de l'objet d'identification ID pour prévenir l'utilisateur de recommencer la saisie de son code de localisation LC car il est erroné.

Dans un deuxième cas si le code de localisation LC est invalide mais si le nombre de saisies N est supérieur au nombre de saisies maximum autorisées NB, (après trois essais infructueux ici), **une quatrième étape 4)** est exécutée ci-dessous.

On inhibe la fonction localisation (étape INH_LOC illustrée à la Fig. 1). Et dans un mode de réalisation non limitatif, on inhibe également l'accès au véhicule et le démarrage afin d'éviter toute utilisation frauduleuse de ces fonctions, fonction localisation comprise.
Bien entendu, si l'objet d'identification ID est retrouvé, on prévoit un moyen de le débloquer, par exemple au moyen d'un code de déblocage connu uniquement du propriétaire de l'objet ID.
Ainsi, au-delà de ce nombre fixé NB de saisies autorisées, on considère que le détenteur de l'objet d'identification ID est un fraudeur.
De plus, on peut prévoir, dans un mode de réalisation non limitatif, d'envoyer un signal d'alerte. Ce signal peut être par exemple :
- un signal d'avertissement envoyé sur le tableau bord du véhicule V qui permet d'avertir l'utilisateur que son objet d'identification ID a été volé ; et/ou
- un signal d'alerte envoyé au téléphone portable pour avertir l'utilisateur qu'il ne s'agit pas d'une simple perte de la clé mais d'un vol avec tentative de localisation du véhicule.

Dans un deuxième mode de réalisation, suivant l'invention et illustré à la Fig. 2, si le code de localisation LC est invalide, **dans une troisième étape 3)**, on lance un délai d'inhibition D pendant lequel la fonction localisation est inhibée (étape INH(D) illustré à la Fig. 2).
Le délai d'inhibition D, permet de protéger la fonction localisation sans la bloquer immédiatement en cas de simple mauvaise manipulation. De plus cela évite de prévoir une manipulation pour le débloquer comme dans le premier mode de réalisation.
Cependant, si l'objet d'identification ID a été volé, pendant le délai d'inhibition D, on peut prévoir également que l'accès et de démarrage de la clé est également inhibée pour permettre à l'utilisateur de réagir en retardant un vol si, pendant l'inhibition de la localisation, un voleur continue à chercher le véhicule au hasard dans les alentours du véhicule même sans avoir accès à la fonction localisation.

Au bout du délai d'inhibition D, **dans une quatrième étape 4)**, on regarde si le délai d'inhibition D a atteint un délai maximum Dmax autorisé.
Si ce n'est pas le cas, **dans une cinquième étape 5a)**, on incrémente le délai d'inhibition D (étape INC(D) illustré à la Fig. 2) et l'utilisateur peut à nouveau saisir son code de localisation LC. On revient à la première étape 1). L'incrémentation peut par exemple être une multiplication par deux du délai précédent.

Par contre, lorsque l'on a atteint le délai d'inhibition maximum autorisé Dmax, on considère que le détenteur de l'objet d'identification ID est un fraudeur. Dans ce cas, **dans une cinquième étape 5b)**, on bloque l'objet d'identification ID (étape INH_ALL illustrée à la Fig. 2) afin d'éviter toute utilisation frauduleuse de ses fonctions, fonction localisation comprise.

On peut prévoir d'envoyer un signal d'alerte. Ce signal peut être par exemple :
- un signal d'avertissement envoyé sur le tableau bord du véhicule V qui permet d'avertir l'utilisateur que son objet d'identification ID a été volé ; et/ou
- un signal d'alerte envoyé au téléphone portable pour avertir l'utilisateur qu'il ne s'agit pas d'une simple perte de la clé mais d'un vol avec tentative de localisation du véhicule.

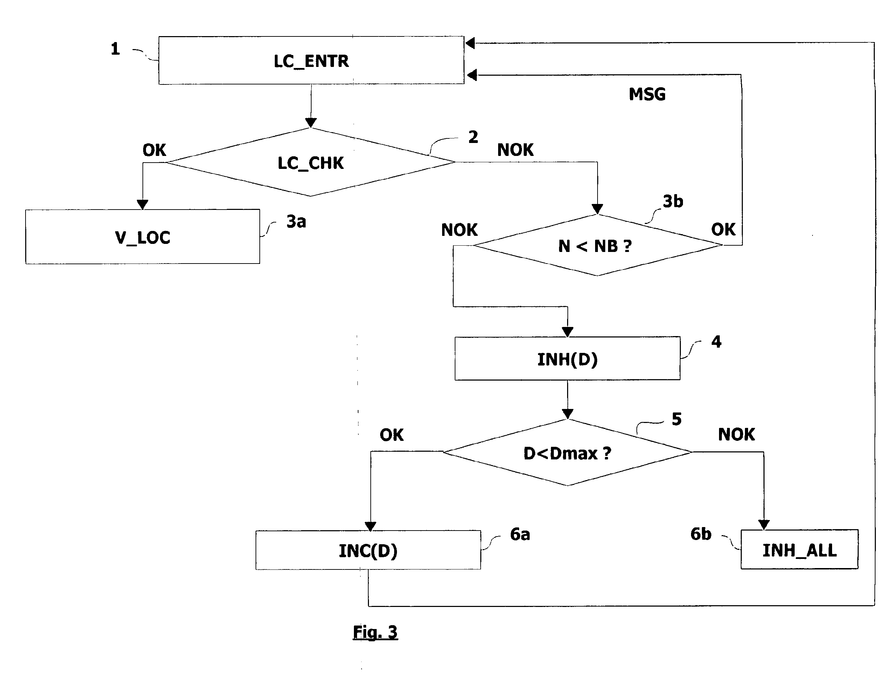

On notera que l'on pourrait très bien combiner le premier mode et le deuxième mode décrits ci-dessus. Ainsi, comme illustré à la Fig. 3, dans un troisième mode de réalisation, on pourrait ainsi inclure un délai d'inhibition incrémental D si la vérification du code LC est négative et supérieure au nombre de saisies autorisées NB.

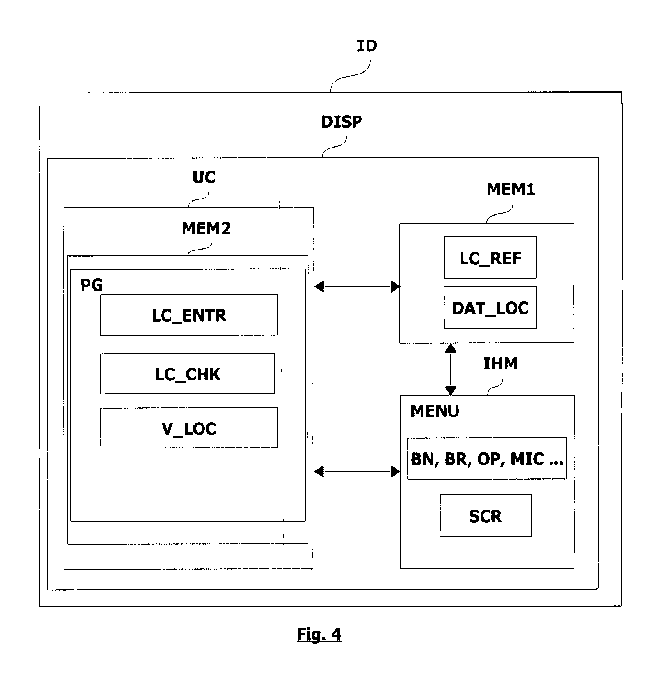

Ainsi, le procédé de l'invention est mis en oeuvre par un dispositif DISP de localisation de véhicule automobile, ledit dispositif DISP étant représenté dans des modes de réalisation différents aux Fig. 4 à 8.
Comme illustré dans ces Fig., le dispositif DISP comporte notamment une unité de contrôle UC pour :
- Saisir un code de localisation LC (LC_ENTR);
- Vérifier le code de localisation LC (LC_CHK) ; et
- Localiser le véhicule automobile V (V_LOC), la localisation étant lancée par un objet d'identification ID, l'objet d'identification ID permettant un accès au véhicule V et son démarrage.

L'unité de contrôle UC peut ainsi être dédiée à la fonction localisation (plus saisie et vérification du code LC). Elle permet en outre de commander l'envoi d'un signal d'alerte si nécessaire comme décrit précédemment.
Bien entendu, l'unité de contrôle UC peut cependant être partagée pour exécuter les autres fonctions de l'objet d'identification ID. Il en est de même avec les mémoires citées précédemment MEM1 et MEM2.

On notera qu'un tel dispositif DISP est compris dans un objet d'identification ID. Ainsi l'objet d'identification ID permet d'effectuer les étapes citées précédemment. La fonction localisation et la fonction accès au véhicule et la fonction démarrage sont ainsi regroupées dans un seul appareil, ici l'objet d'identification ID, ce qui, pour l'utilisateur du véhicule, est très pratique et peu encombrant.

A cet effet, selon des modes de réalisation non limitatifs illustrés aux Fig. 4 à 8, un objet d'identification ID comporte :
- 1) Une interface homme-machine IHM comprenant notamment :
   - un menu MENU permettant de :
      - saisir le code de localisation (via des boutons de navigation BN, un lecteur biométrique BR, un microphone MIC, une optique OP etc.) ; et
      - saisir les données de localisation DAT_LOC (via des boutons de navigation BN, un microphone MIC, une optique OP etc.) ; et
   - 2) une mémoire MEM1 permettant de :
      - sauvegarder les données DAT_LOC concernant la localisation du véhicule (le cas échéant) ;
      - un code de localisation référentiel LC_REF ; et
   - 3) L'unité de contrôle UC précitée.

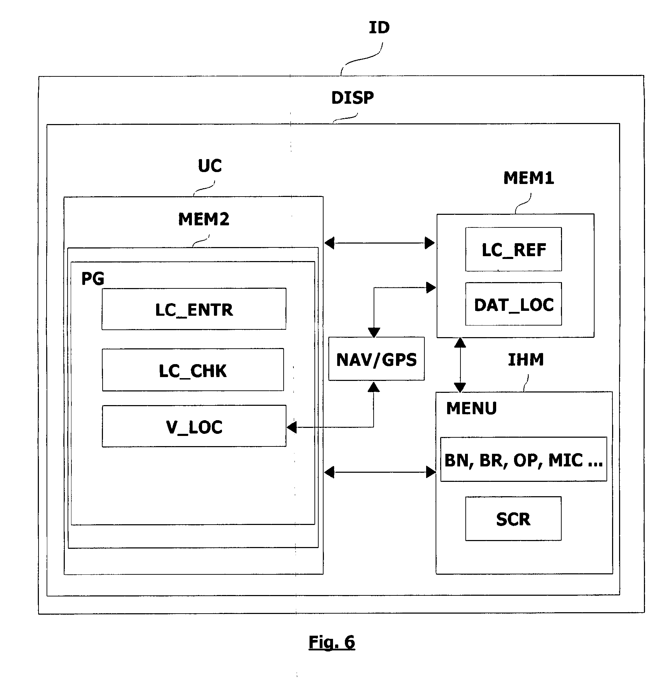

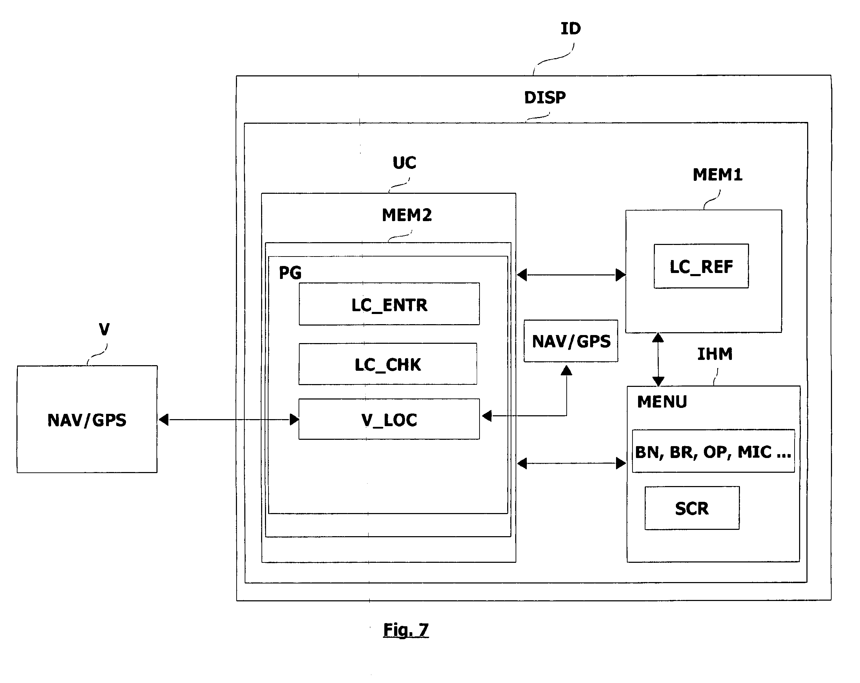

Par ailleurs, l'objet d'identification ID peut comporter un système de localisation tel qu'un système GPS et un système de navigation NAV associé comme illustré aux Fig. 6 et 7.

Le dispositif DISP peut comporter la mémoire MEM1, le système de localisation GPS ainsi que l'interface homme-machine IHM. Ceci est illustré dans l'exemple non limitatif des Fig. 4 à 8.

On notera que la fonction localisation V_LOC peut être sélectionnée, dans des exemples non limitatifs, via les boutons de navigation BN dans le menu MENU, via le microphone MIC etc. Dans un exemple non limitalif, après la sélection de ladite fonction, la saisie du code de localisation LC est demandée et s'il est valide, la fonction localisation est lancée et le résultat/guidage affiché sur l'écran SCR.

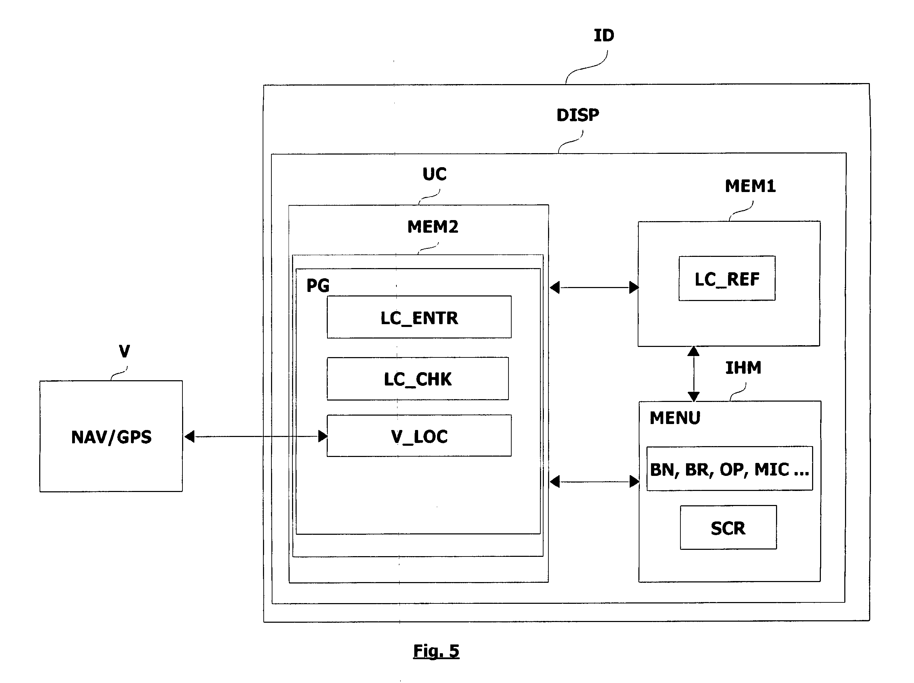

On remarquera, qu'à la Fig. 4 est illustré un dispositif de localisation DISP ainsi qu'un objet identifiant ID associé permettant d'effectuer une localisation statique-statique comme décrit précédemment.
A la Fig. 5 est illustré un dispositif de localisation DISP ainsi qu'un objet identifiant ID associé permettant d'effectuer une localisation statique-dynamique comme décrit précédemment. Le véhicule V comporte un système de localisation tel qu'un système GPS (et ici un système de navigation NAV associé)..
A la Fig. 6 est illustré un dispositif de localisation DISP ainsi qu'un objet identifiant ID associé permettant d'effectuer une localisation dynamique-statique comme décrit précédemment. L'objet identifiant ID comporte un système de localisation tel qu'un système GPS (et ici un système de navigation NAV associé)..
A la Fig. 7 est illustré un dispositif de localisation DISP ainsi qu'un objet identifiant ID associé permettant d'effectuer une localisation dynamique-dynamique comme décrit précédemment. Le véhicule V ainsi que l'objet identifiant ID comportent chacun un système de localisation tel qu'un système GPS (et ici un système de navigation NAV associé).

On notera que la mise en oeuvre du procédé de localisation exposé ci-dessus peut être effectuée au moyen d'un dispositif micro-programmé « software », d'une logique câblée, ou de composants électroniques « hardware ».
Ainsi, le dispositif de localisation DISP peut comporter un produit programme d'ordinateur PG comportant une ou plusieurs séquences d'instructions exécutables par une unité de traitement d'information telle qu'un microprocesseur, ou d'une unité de traitement d'un micro-contrôleur, d'un ASIC, d'un ordinateur etc., l'exécution desdites séquences d'instructions permettant une mise en oeuvre du procédé décrit.
Un tel programme d'ordinateur PG peut par exemple être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution. Dans les exemples non limitatifs des Fig. 4 à 8, le programme d'ordinateur PG est inscrit dans une mémoire MEM2 du dispositif de localisation DISP.

Bien entendu, l'invention a été décrite pour un objet d'identification ID, mais elle peut être étendue à plusieurs objets d'identification d'un même véhicule automobile.
Bien entendu, l'invention décrite n'est pas limitée au mode de réalisation décrit ci-dessus. On pourra par exemple prévoir un mode de réalisation dans lequel au moins une des étapes de :
- saisie du code de localisation, et/ou
- vérification du code de localisation et/ou,
- localisation du véhicule.
peut également être effectuée par un deuxième appareil mobile MB coopérant avec l'objet d'identification ID par une connexion cryptée, cette connexion pouvant dans un exemple non limitatif être sans fil, par exemple de type Bluetooth.
Par contre le lancement de la fonction localisation est toujours effectué par l'objet d'identification ID. Ainsi, lors du lancement de la fonction localisation à partir de l'objet d'identification DF, ce dernier va par exemple demander à l'utilisateur d'entrer son code de localisation LC sur son deuxième appareil mobile MB. L'avantage est que cela permet d'être sûr d'avoir la fonction localisation accessible lors de l'utilisation du véhicule. En effet, lors de l'utilisation du véhicule, l'utilisateur porte toujours sur lui l'objet d'identification ID qui permet également l'accès au véhicule et son démarrage, ce qui n'est pas le cas pour son deuxième appareil mobile MB.

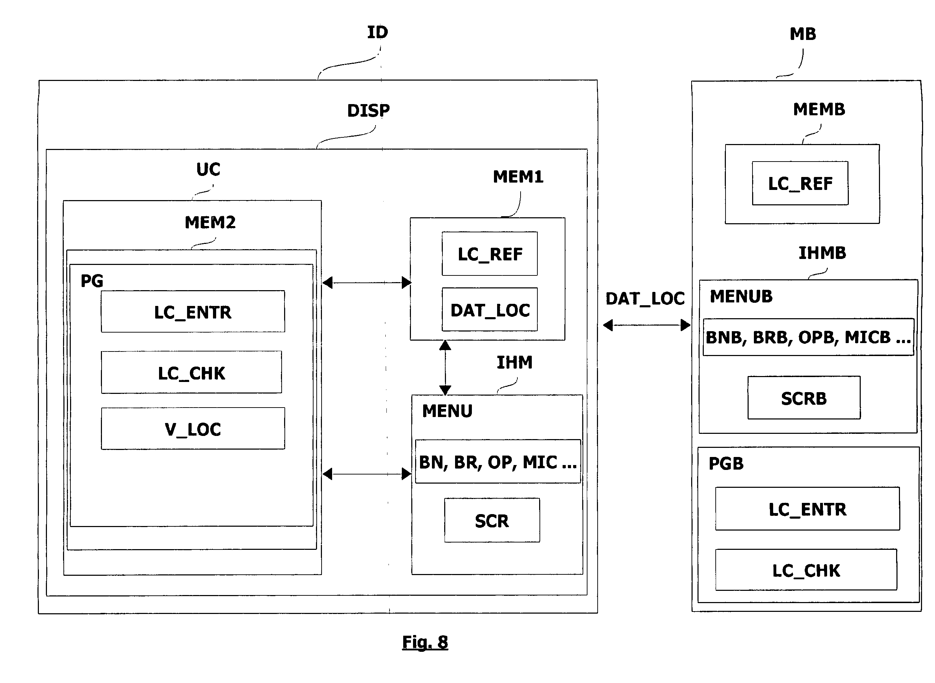

La Fig. 8 montre un exemple d'un tel mode de réalisation dans lequel un deuxième appareil mobile coopère avec l'objet d'identification ID et le dispositif de localisation DISP illustrés dans la Fig. 4 (permettant une localisation statique-statique), et permet la saisie du code LC, sa vérification et l'affichage des données de localisation DAT_LOC. Il comporte à cet effet une interface homme-machine IHMB avec un menu MENUB adéquate, un écran SCRB et un produit programme d'ordinateur PRGB permettant la mise en oeuvre de la saisie et de la vérification du code LC.

Bien entendu, le deuxième appareil mobile MB peut être utilisé avec les autres modes de réalisation du dispositif de localisation DISP et objet identifiant associé illustrés aux Fig. 5 à 7.

Par exemple, le deuxième appareil MB peut être un téléphone mobile, un pda (« personal data assistant » en anglais), ou encore un système GPS (« Global Positioning System ») etc.

Le mode de réalisation qui utilise un deuxième appareil MB, permet d'utiliser des ressources matérielles coûteuses et encombrantes (clavier alpha-numérique BNB, microphone, optique photo, lecteur biométrique BRB, grand écran SCRB, GPS etc.) qui sont de plus en plus répandues, sans avoir à les intégrer dans un objet d'identification ID. En conséquence, on peut utiliser des objets d'identification existants ID avec très peu de modifications. Il suffit de configurer l'objet ID pour une coopération avec le deuxième appareil mobile MB.
Par ailleurs, ces ressources sont plus simples à utiliser et plus agréables pour l'utilisateur (saisie plus pratique sur un clavier plus grand, affichage plus agréable sur un écran plus grand etc...).
Dans ce cas, pour un affichage de la localisation sur un écran du deuxième appareil mobile MB après l'activation de la fonction localisation, l'objet d'identification ID envoie les données cryptées de localisation DAT_LOC mémorisées dans sa mémoire MEM1 au deuxième appareil mobile MB. On notera que le fait d'avoir ces données dans l'objet d'identification ID, permet d'être sûr d'avoir les données de localisation DAT_LOC du véhicule accessibles lors de l'utilisation du véhicule. En effet, lors de l'utilisation du véhicule, l'utilisateur porte toujours sur lui l'objet d'identification ID qui permet également l'accès au véhicule et son démarrage, ce qui n'est pas le cas pour son deuxième appareil mobile MB.

Dans ce cas également, dans des exemples de réalisation non limitatifs,
- le code de référence LC_REF peut être également inscrit en mémoire MEMB du deuxième appareil mobile MB afin de déporter la vérification du code de localisation dans l'appareil mobile MB;
- le système de localisation, dans l'exemple le système GPS (NAV/GPS), peut être également compris dans le deuxième appareil mobile MB au lieu d'être dans l'objet d'identification ID. Ce dernier ID interroge le deuxième appareil mobile MB quand l'utilisateur quitte le véhicule. Il récupère ainsi la position de la place de parking et il la stocke en mémoire MEM1. Puis quand l'utilisateur veut retrouver son véhicule, si le deuxième appareil MB est présent, le système GPS de cet appareil MB est utilisé pour faire une localisation dynamique/statique ou dynamique/dynamique comme vu précédemment.

Ainsi, l'invention présente notamment les avantages suivants :
- d'empêcher un fraudeur d'utiliser la fonction localisation du véhicule V grâce au code personnel LC dédié à la localisation qui n'autorise l'accès à cette fonction localisation que s'il est valide, évitant ainsi tout vol de véhicule ou simplement le vol son contenu suite au vol de l'objet d'identification ID ; La fonction localisation est ainsi sécurisée grâce au code LC ;
- de permettre à un utilisateur du véhicule de retrouver l'endroit où est garé son véhicule. Ainsi, on permet la localisation du véhicule garé par une personne autorisée uniquement, en empêchant une personne autre qu'un utilisateur du véhicule automobile de localiser le véhicule après le vol de l'objet d'identification permettant l'accès au véhicule et son démarrage, et par conséquent de voler ledit véhicule ;
- De plus, l'usage de la fonction localisation étant non systématique, l'accès protégé de cette fonction n'est pas gênant pour l'utilisateur, contrairement à une solution qui proposerait un accès protégé à toutes les fonctions de l'objet d'identification dont les fonctions accès et démarrage du véhicule.

## Revendications

1. Procédé de localisation d'un véhicule automobile (V), comportant les étapes de :
- Saisir un code de localisation (LC) ;
- Vérifier le code de localisation (LC) ; et
- Localiser le véhicule automobile (V), la localisation étant lancée par un objet d'identification (ID), l'objet d'identification (ID) permettant un accès au véhicule (V) et son démarrage ,
**caractérisé en ce que** si le code de localisation (LC) est invalide, un délai d'inhibition (D) est lancé pendant lequel la localisation (V_LOC) est inhibée.

2. Procédé de localisation selon la revendication 1, dans lequel la localisation du véhicule automobile s'effectue lorsque ce dernier est à l'arrêt.

3. Procédé de localisation selon la revendication 1 ou 2, dans lequel la saisie du code de localisation (LC) est autorisé un nombre fixé (NB) de fois.

4. Procédé de localisation selon la revendication 3, dans lequel l'accès et le démarrage au véhicule sont inhibés en même temps que la localisation.

5. Procédé de localisation selon l'une des revendications précédentes, dans lequel la localisation du véhicule se fait par une lecture de données de localisation (DAT_LOC) du véhicule automobile dans l'objet d'identification (ID).

6. Procédé de localisation selon l'une des revendications précédentes, dans lequel la localisation du véhicule se fait par une communication à distance avec le véhicule (V) dans le cas où il n'existe pas de données de localisation (DAT_LOC) dans l'objet d'identification (ID).

7. Dispositif de localisation (DISP) d'un véhicule automobile (V), comportant une unité de contrôle (UC) adaptée pour :
- Saisir un code de localisation (LC) ; et
- Vérifier le code de localisation (LC) ; et
- Localiser le véhicule automobile (V), la localisation étant lancée par un objet d'identification (ID), l'objet d'identification (ID) permettant un accès au véhicule (V) et son démarrage
**caractérisé en ce que** si le code de localisation (LC) est invalide, l'unité de contrôle lance un délai d'inhibition (D) pendant lequel la localisation (V_LOC) est inhibée.

8. Objet d'identification (ID) pour véhicule automobile (V), **caractérisé en ce qu'**il comporte un dispositif de localisation (DISP) selon la revendication précédente.

9. Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 6.

## Patentansprüche

1. Verfahren zum Lokalisieren eines Kraftfahrzeugs (V), das die folgenden Schritte umfasst:
- Erfassen eines Lokalisierungscodes (LC);
- Verifizieren des Lokalisierungscodes (LC); und
- Lokalisieren des Kraftfahrzeugs (V), wobei die Lokalisierung durch ein Identifikationsobjekt (ID) gestartet wird, wobei das Identifikationsobjekt (ID) einen Zugriff auf das Fahrzeug (V) und sein Anlassen ermöglicht,
**dadurch gekennzeichnet, dass** dann, wenn der Lokalisierungscode (LC) ungültig ist, eine Sperrverzögerung (D) gestartet wird, während derer die Lokalisierung (V_LOC) gesperrt ist.

2. Lokalisierungsverfahren nach Anspruch 1, wobei die Lokalisierung des Kraftfahrzeugs erfolgt, wenn dieses Letztere still steht.

3. Lokalisierungsverfahren nach Anspruch 1 oder 2, wobei die Erfassung des Lokalisierungscodes (LC) in einer festen Anzahl (NB) von Malen zugelassen ist.

4. Lokalisierungsverfahren nach Anspruch 3, wobei der Zugriff auf das Fahrzeug und dessen Anlassen zur gleichen Zeit wie die Lokalisierung gesperrt sind.

5. Lokalisierungsverfahren nach einem der vorhergehenden Ansprüche, wobei die Lokalisierung des Fahrzeugs durch ein Lesen von Lokalisierungsdaten (DAT_LOC) des Kraftfahrzeugs im Identifikationsobjekt (ID) erfolgt.

6. Lokalisierungsverfahren nach einem der vorhergehenden Ansprüche, wobei das Lokalisieren des Fahrzeugs durch eine Fernkommunikation mit dem Fahrzeug (V) in dem Fall erfolgt, in dem keine Lokalisierungsdaten (DAT_LOC) in dem Identifikationsobjekt (ID) vorhanden sind.

7. Vorrichtung (DISP) zum Lokalisieren eines Kraftfahrzeugs (V), die eine Steuereinheit (UC) umfasst, die dafür ausgelegt ist:
- einen Lokalisierungscode (LC) zu erfassen; und
- den Lokalisierungscode (LC) zu verifizieren; und
- das Kraftfahrzeug (V) zu lokalisieren, wobei die Lokalisierung durch ein Identifikationsobjekt (ID) gestartet wird, wobei das Identifikationsobjekt (ID) einen Zugriff auf das Fahrzeug (V) und dessen Anlassen ermöglicht,
**dadurch gekennzeichnet, dass** dann, wenn der Lokalisierungscode (LC) ungültig ist, die Steuereinheit eine Sperrverzögerung (D) startet, während derer die Lokalisierung (V_LOC) gesperrt ist.

8. Identifikationsobjekt (ID) für Kraftfahrzeug (V), **dadurch gekennzeichnet, dass** es eine Lokalisierungsvorrichtung (DISP) nach dem vorhergehenden Anspruch umfasst.

9. Programmprodukt (PG) eines Rechners, das eine oder mehrere Folgen von Anweisungen enthält, die von einer Datenverarbeitungseinheit ausführbar sind, wobei die Ausführung der Anweisungsfolgen eine Ausführung des Verfahrens nach einem der vorhergehenden Ansprüche 1 bis 6 ermöglicht.

## Claims

1. Method for locating a motor vehicle (V), comprising the steps of:
- Inputting a localization code (LC);
- Verifying the localization code (LC); and
- Locating the motor vehicle (V), the localization being launched by an identification object (ID), the identification object (ID) allowing the vehicle (V) to be accessed and to be started,
**characterized in that**, if the localization code (LC) is invalid, an inhibition period (D) is launched during which the localization (V_LOC) is inhibited.

2. Localization method according to Claim 1, in which the localization of the motor vehicle is carried out when the latter is stationary.

3. Localization method according to either of Claims 1 and 2, in which the input of the localization code (LC) is permitted a fixed number (NB) of times.

4. Localization method according to Claim 3, in which the access to and the starting of the vehicle are inhibited at the same time as the localization.

5. Localization method according to one of the preceding claims, in which the localization of the vehicle is carried out by reading localization data (DAT_LOC) for the motor vehicle within the identification object (ID).

6. Localization method according to one of the preceding claims, in which the localization of the vehicle is carried out via a remote communication with the vehicle (V) in the case where there are no localization data (DAT_LOC) within the identification object (ID).

7. Localization device (DISP) for a motor vehicle (V), comprising a control unit (UC) designed for:
- Inputting a localization code (LC);
- Verifying the localization code (LC); and
- Locating the motor vehicle (V), the localization being launched by an identification object (ID), the identification object (ID) allowing the vehicle (V) to be accessed and to be started,
**characterized in that**, if the localization code (LC) is invalid, the control unit launches an inhibition period (D) during which the localization (V_LOC) is inhibited.

8. Identification object (ID) for a motor vehicle (V), **characterized in that** it comprises a localization device (DISP) according to the previous claim.

9. Computer program product (PG) comprising one or more sequences of instructions executable by a data processing unit, the execution of the said sequences of instructions allowing the method to be implemented according to any one of the preceding Claims 1 to 6.
